# EUROPEAN PATENT APPLICATION

(11) **EP 3 593 941 A1**
(43) Date of publication of application: **15.01.2020**
(21) Application number: 19183883.8
(22) Date of filing: 02.07.2019
(51) Int. Cl.: B23Q 7/04, B23Q 17/00, B25J 9/16

(54) **LOADING METHOD OF WORKPIECE**

(30) Priority: 08.07.2018 JP 2018129562
(71) Applicant: Nakamura-Tome Precision Industry Co., Ltd., Ishikawa 920-2195 (JP)
(72) Inventor: KAKUMOTO, Masahiko, Ishikawa, Ishikawa 920-2195 (JP)
(74) Representative: Wunderlich & Heim Patentanwälte Partnerschaftsgesellschaft mbB

(57) **Abstract**

A loading method of loading a workpiece (W) in an NC machine tool by a loader device (10) includes: causing a feed motion of a chuck (14) adapted to chuck the workpiece toward the workpiece; controlling an amount of the feed motion by a feed control system and stopping the feed motion; and subsequently, causing the chuck to chuck the workpiece and load the workpiece. Under a limitation on an output torque of a feed motor during controlling the amount of the feed motion, the feed control system monitors a load of the feed motor and detects a position where the feed motion is to be stopped by bringing the chuck into contact with the workpiece.

## Description

### BACKGROUND

The present invention relates to a loading method of loading a workpiece in a machining area in an NC machine tool, which includes a method of unloading a machined product out of the NC machine tool.

An NC machine is disclosed in, for instance, JP-A-2016-175154 that includes a numerically controllable machine tool and a loader device, which is integral with the machine tool, for loading and unloading a workpiece to and from the machine tool.

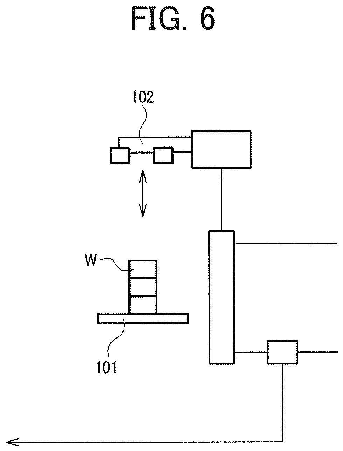

FIG. 6 illustrates a typical loader device. As illustrated in FIG. 6, a loader 102 is moved downward to chuck a workpiece W at a constant level (position). For stacked workpieces W as illustrated in FIG. 6, a level of uppermost one of the workpieces W is detected. After the uppermost workpiece W is loaded, a level of a workpiece table 101 is vertically adjusted to allow the loader 102 to be moved downward to chuck the workpiece W at the constant level (position).

Thus, a level adjustment mechanism for the workpiece table 101, a detector for the workpieces W, etc. are necessitated, so that it is difficult to make the loader device, which includes a workpiece storage, compact.

### SUMMARY OF THE INVENTION

An object of the invention is to provide a loading method of a workpiece that is capable of providing a compact loader device, which includes a workpiece storage, while achieving an easy loading operation.

A method according to the invention is a loading method of loading a workpiece in an NC machine tool by a loader device, the method comprising:
causing a feed motion of a chuck adapted to chuck the workpiece toward the workpiece;
controlling an amount of the feed motion by a feed control system and stopping the feed motion; and
subsequently, causing the chuck to chuck the workpiece and load the workpiece,
wherein, under a limitation on an output torque of a feed motor that causes the feed motion of the chuck during controlling the amount of the feed motion, the feed control system monitors a load of the feed motor, and detects a position where the feed motion is to be stopped by bringing the chuck into contact with the workpiece.

In the loading method of a workpiece according to the invention, the loader device is equipped in the machine tool and numerically controlled.

The chuck is brought into contact with the workpiece by the feed motor, which causes the feed motion of the chuck, while the load of the motor is monitored under the limitation on the output torque of the feed motor. The load of the motor can be monitored by monitoring, for instance, a position deviation (command coordinate values - current coordinate value) or a value of current flowing through the motor. In response to a rapid increase in the load, a position (level) where the chuck reaches the workpiece can be automatically detected. Furthermore, since the output torque is limited, the chuck reaches the workpiece without causing an increase in the torque. Thus, the chuck and the workpiece are prevented from receiving an excessive force.

The method according to the invention allows for, when distances from an original position of the chuck to workpieces are different, detecting a position where the chuck reaches each workpiece and stopping the feed motion of the chuck through the control of the feed motor, without the necessity of either using a special sensor or moving the workpiece storage.

In addition, the position of the chuck is detected by the NC apparatus, facilitating the subsequent transfer of the workpiece.

In the method according to the invention, the loading method may further comprise:
moving the chuck downward to be brought into contact with uppermost one of workpieces which include the workpiece and are stacked on a workpiece storage;
causing the chuck to hold the uppermost workpiece and load the uppermost workpiece in the NC machine tool;
moving the chuck downward to be brought into contact with second one of the workpieces subsequent to the uppermost workpiece; and
causing the chuck to hold the second workpiece subsequent to the uppermost workpiece and load the second workpiece in the NC machine tool.

This allows the workpieces stacked on the workpiece storage to be chucked by the chuck and transferred to a machining area in the NC machine tool in sequence.

It should be noted that although the method according to the invention is explained as a loading method, the invention is also applicable to the unloading, that is, transferring a machined product from the NC machine tool to a product storage. An unloading method thus falls within the scope of the invention.

In the method according to the invention, the loading method may further comprise:
causing a closing motion of chuck pieces that are provided to the chuck toward the workpiece; and
controlling an amount of the closing motion by a close control system and stopping the closing motion by bringing the chuck pieces into contact with the workpiece,
wherein, under a limitation on an output torque of a chuck motor that causes the closing motion of the chuck pieces during controlling the amount of the closing motion, the close control system monitors a load of the chuck motor, and detects a position where the closing motion is to be stopped by bringing the chuck pieces into contact with the workpiece.

This allows for, even when workpieces are different in size, automatically detecting the size of each workpiece so that each workpiece is chucked by the chuck pieces. In addition, the closing motion of the chuck pieces can be stopped without the necessity of using a special sensor by detecting the position where the chuck pieces reach each workpiece through the control of the motor that causes the closing motion of the chuck pieces.

### BRIEF DESCRIPTION OF THE DRAWINGS

FIG. 1 illustrates a loader device;
FIG. 2 is a control block diagram of a servomotor;
FIGs. 3A to 3C each illustrate a method of automatically detecting a level of stacked workpieces;
FIG. 4 is a flowchart showing a loading process by a loading portion;
FIG. 5 is a flowchart showing a process of closing chuck pieces; and
FIG. 6 illustrates a typical loading method.

### DESCRIPTION OF EXEMPLARY EMBODIMENTS

The following disclosure provides many different embodiments, or examples, for implementing different features of the provided subject matter. These are, of course, merely examples and are not intended to be limiting. In addition, the disclosure may repeat reference numerals and/or letters in the various examples. This repetition is for the purpose of simplicity and clarity and does not in itself dictate a relationship between the various embodiments and/or configurations discussed. Further, when a first element is described as being "connected" or "coupled" to a second element, such description includes embodiments in which the first and second elements are directly connected or coupled to each other, and also includes embodiments in which the first and second elements are indirectly connected or coupled to each other with one or more other intervening elements in between.

Exemplary embodiments are described below. Note that the following exemplary embodiments do not in any way limit the scope of the content defined by the claims laid out herein. Note also that all of the elements described in the present embodiment should not necessarily be taken as essential elements

### 1. Loader device

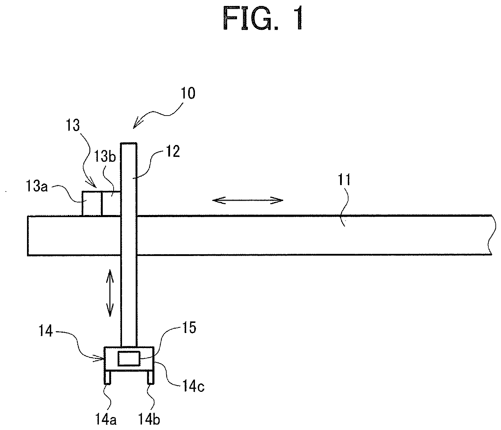

An NC machine tool includes a body, an upper portion of which is attached with a travelling rail 11 as illustrated in FIG. 1.

A loader device 10 that horizontally moves along the travelling rail 11 is provided. The loader device 10 includes a lifting arm 12, a chuck 14 located at a lower end of the lifting arm 12, a drive unit 13 that controls a displacement of the lifting arm 12, etc.

The drive unit 13 includes a servomotor (horizontal feed motor) 13a that causes the loader device 10 to horizontally move and a servomotor (vertical feed motor) 13b that causes the lifting arm 12 and the chuck 14 to vertically move.

The chuck 14 includes chuck pieces (first chuck piece 14a, second chuck piece 14b) for chucking a workpiece and a chuck body 14c that supports the chuck pieces 14a, 14b such that the chuck pieces 14a, 14b are openable and closable. The chuck 14 may include a servomotor 15 that causes at least a closing motion of the chuck pieces 14a, 14b.

### 2. Feed Control System of Servomotor

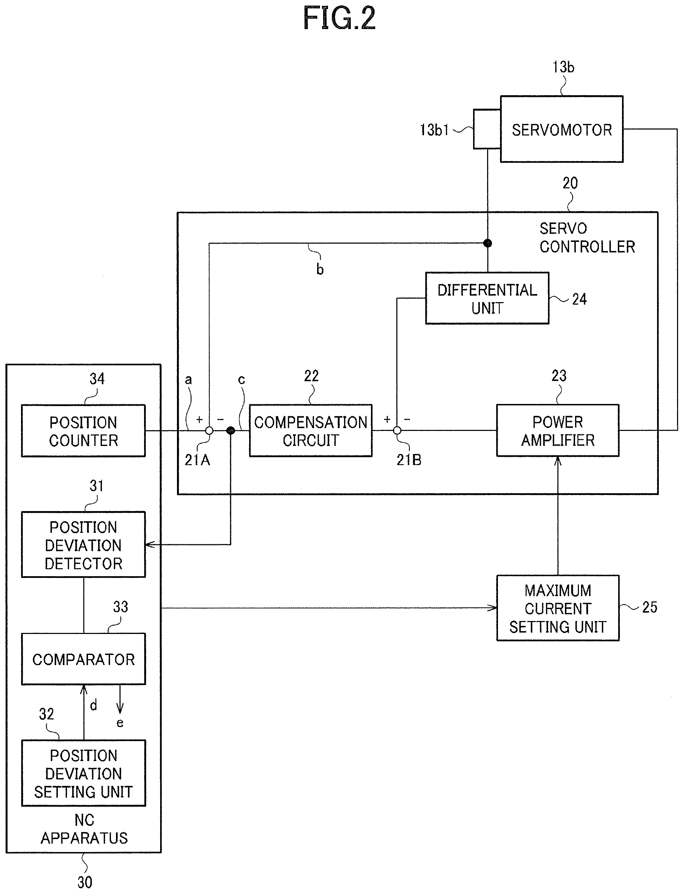

FIG. 2 illustrates a control system that controls the servomotor 13b, which causes a vertical feed motion of the chuck 14. As illustrated in FIG. 2, the servomotor 13b is controlled by a servo controller 20. The servo controller 20 may include difference units 21A, 21B, a compensation circuit 22, a power amplifier 23, and a differential unit 24. The difference unit 21A gives to a compensation circuit 22 a difference signal (position deviation) "c" between a position command "a" given from a position counter 34 of the NC apparatus 30 and a position feedback signal "b" given from a pulse encoder 13b1 equipped to a feed motor 7. The difference unit 21B gives to the power amplifier 23 a difference signal between a speed command based on the position deviation "c" from the compensation circuit 22 and a speed feedback signal from a differential unit 24. Electric current outputted from the power amplifier 23 is limited by a set value of a maximum current setting unit 25. The NC apparatus 30 increases or decreases this set value at a necessary timing.

The position deviation c outputted from the difference unit 21A is detected by a position deviation detector 31 provided to the NC apparatus 30. Meanwhile, a set value "d", which is a target to compare for detection of an increase or a decrease in the position deviation, is set in a position deviation setting unit 32 provided to the NC apparatus 30. When the detected position deviation "c" reaches the set value "d", a comparator 33 outputs a control output "e". The NC apparatus 30 reads coordinates of the chuck 14 at the time of the output of the control output "e" and stores the coordinates in a memory.

The position deviation detector 31, the position deviation setting unit 32, and comparator 33 are actually implemented by a program for the NC apparatus 30. When no position deviation "c" is acquired from the servo controller 20, the position command "a" from the NC apparatus 30 and the position feedback signal "b" from the pulse encoder 13b1 or the like may be inputted to the position deviation detector 31 so that a difference therebetween is detected as the position deviation "c".

### 3. Loading Method of Workpiece

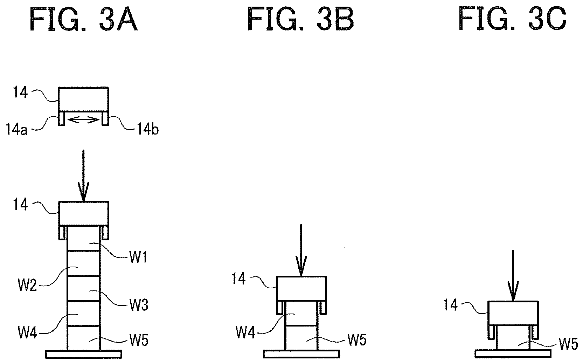

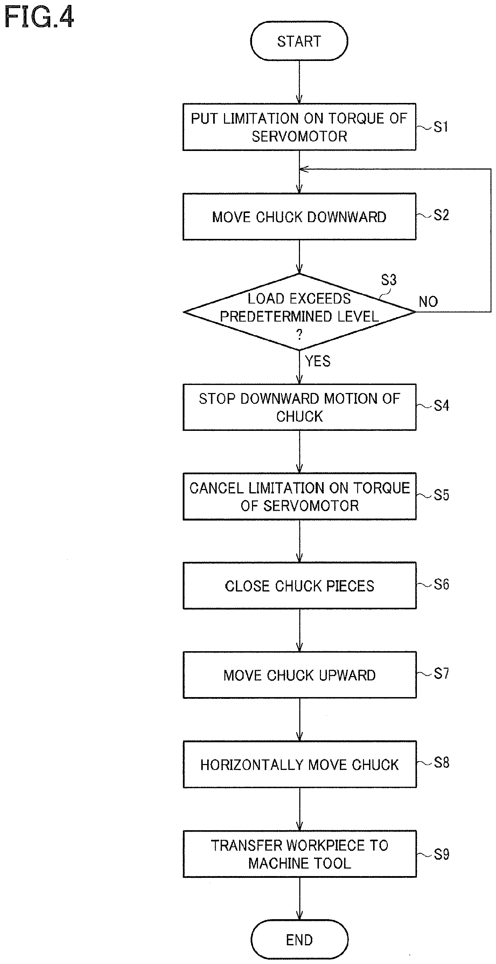

Next, a loading method of the workpiece W will be explained with reference to FIGs. 3A to 3C and FIG. 4. FIG. 4 is a flowchart showing a loading operation process by a loading portion.

The servomotor 13b is subject to a limitation on an output torque thereof (Step 1). Under such an output torque limitation, the servomotor 13b causes the chuck 14 to move downward in accordance with the position command "a" from the NC apparatus 30 (Step 2). A load of the servomotor 13b is monitored (Step 3), and the downward motion in Step 2 is repeated unless the load exceeds a predetermined level. At this time, the chuck pieces 14a, 14b are opened.

As illustrated in FIG. 3A, the downward motion of the chuck 14 causes the chuck body 14c to be pressed against an upper surface of an uppermost workpiece W₁. Such a state is automatically detected in response to the control output "e" outputted from the NC apparatus 30, thereby detecting a position of the workpiece W₁.

The servo controller 20 controls the feed motor 13b such that the difference signal (position deviation) "c" between the position command "a" and the position feedback signal "b" reaches zero. In this regard, when the downward motion of the chuck 14 is stopped with the chuck body 14c being pressed against the upper surface of the uppermost workpiece W₁, the position feedback signal "b" cannot follow the position command "a" from the NC apparatus 30 although the position command "a" continuously changes. This causes a rapid change in the position deviation (command coordinate value - current coordinate value) "c".

The comparator 33 of the NC apparatus 30 thus outputs the control output "e", since the detected position deviation "c" reaches the set value "d". In response to the control output "e", it is automatically detected that the chuck body 14c reaches the upper surface of the uppermost workpiece W₁.

When the chuck 14 is brought into contact with the workpiece W₁, the load of the servomotor 13b rapidly increases. In other words, the output of the control output "e" is equated with the exceedance of the load beyond the predetermined level in Step 3 in FIG. 4.

It should be noted that although the load of the servomotor 13b rapidly increases upon the contact of the chuck 14 with the workpiece W₁ under the torque limitation, the torque of the servomotor 13b is regulated to a constant level. Thus, the chuck 14 and the workpiece W₁ are prevented from receiving an excessive force.

When the result of the determination is YES in Step 3 in FIG. 4, the downward motion of the chuck 14 is stopped (Step 4). The torque limitation for the servomotor 13b may then be cancelled (Step 5).

Next, the chuck pieces 14a, 14b are closed, so that the workpiece W₁ is held by the chuck 14 (Step 6). After the chuck 14 is moved upward (Step 7), the workpiece W₁ is horizontally fed along the travelling rail 11 by the chuck 14 (Step 8) and transferred to a main-shaft side of, for instance, a lathe located in a machining area in a machine tool (Step 9). The chuck 14 is then returned to an original position illustrated in FIG. 1.

Repeating the above-described process enables, even when, for instance, five workpieces (W₁ to W₅) are stacked as illustrated in FIG. 3A, the second and subsequent workpieces W₂ to W₅ from the uppermost one to come into contact with the chuck 14 in sequence, thereby automatically detecting respective positions thereof. FIGs. 3B and 3C illustrate that the workpiece W₄, W₅ are automatically detected, respectively. The second and subsequent workpieces W₂ to W₅ from the uppermost one can thus be loaded in the machining area in the machine tool in sequence.

In addition, it can be detected that the workpiece storage stores no workpiece W with reference to position coordinates of the NC apparatus 30.

The above description is intended to explain the method where the load of the motor is monitored on the basis of position deviation for detection of the load exceeding the set level. Alternatively, the feed control system may detect the load of the motor on the basis of a value of current flowing through the motor. However, the monitoring based on position deviation enables load detection with a higher accuracy.

### 4. Method of Closing Chuck Pieces

The closing and opening, especially, closing, of the chuck pieces, such as the first chuck piece 14a and the second chuck piece 14b, provided to the chuck 14 may be controlled by the servomotor (chuck motor) 15. The servomotor 15 may be controlled by a close control system similar to the feed control system shown in FIG. 2. It should be noted that a method of closing the chuck pieces described below may be performed independently of the above-described loading method.

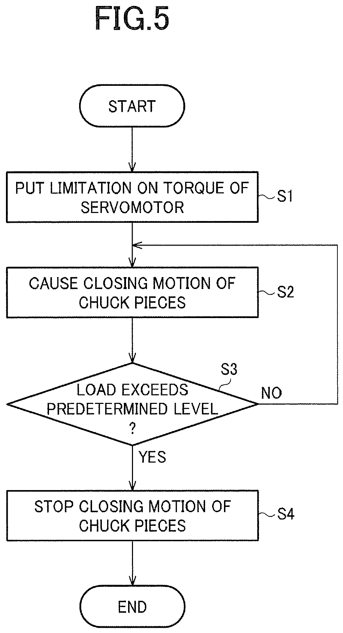

FIG. 5 is a flowchart showing a process of closing the chuck pieces.

The servomotor 15 is subject to a limitation on an output torque thereof (Step 1). Under such an output torque limitation, the servomotor 15 causes a closing motion of the chuck pieces 14a, 14b of the chuck 14 in accordance with the position command a from the NC apparatus 30 (Step 2). A load of the servomotor 15 is monitored (Step 3), and the closing motion in Step 2 is repeated unless the load exceeds a predetermined level.

Upon the contact of the chuck pieces 14a, 14b with the workpiece W, the load of the servomotor 15 rapidly increases, causing the control output "e" to be outputted from the comparator 33 illustrated in FIG. 2 as described above. This is equated with the exceedance of the load beyond the predetermined level in Step 3 in FIG. 5. The closing motion of the chuck pieces 14a, 14b is then stopped (Step 4).

As described above, under the limitation on the output torque during feeding in a direction for closing the chuck 14, the chuck 14 is closed with the load of the servomotor 15 being monitored. Detecting a change in the load of the servomotor 15 allows workpieces with different widths to be held while automatically detected. In this case, the close control system may also detect the load of the servomotor 15 on the basis of a value of current flowing through the servomotor 15.

## Claims

1. A loading method of loading a workpiece in an NC machine tool by a loader device, the method comprising:
causing a feed motion of a chuck adapted to chuck the workpiece toward the workpiece;
controlling an amount of the feed motion by a feed control system and stopping the feed motion; and
subsequently, causing the chuck to chuck the workpiece and load the workpiece,
wherein, under a limitation on an output torque of a feed motor that causes the feed motion of the chuck during controlling the amount of the feed motion, the feed control system monitors a load of the feed motor, and detects a position where the feed motion is to be stopped by bringing the chuck into contact with the workpiece.

2. The loading method according to claim 1, further comprising:
moving the chuck downward to be brought into contact with uppermost one of workpieces which include the workpiece and are stacked on a workpiece storage;
causing the chuck to hold the uppermost workpiece and load the uppermost workpiece in the NC machine tool;
moving the chuck downward to be brought into contact with second one of the workpieces subsequent to the uppermost workpiece; and
causing the chuck to hold the second workpiece subsequent to the uppermost workpiece and load the second workpiece in the NC machine tool.

3. The loading method according to claim 1 or 2, further comprising:
causing a closing motion of chuck pieces that are provided to the chuck toward the workpiece; and
controlling an amount of the closing motion by a close control system and stopping the closing motion by bringing the chuck pieces into contact with the workpiece,
wherein, under a limitation on an output torque of a chuck motor that causes the closing motion of the chuck pieces during controlling the amount of the closing motion, the close control system monitors a load of the chuck motor, and detects a position where the closing motion is to be stopped by bringing the chuck pieces into contact with the workpiece.
